(19) Europäisches Patentamt
European Patent Office
Office européen des brevets

(11) **EP 3 412 576 A1**

(12) **DEMANDE DE BREVET EUROPEEN**

(43) Date de publication:
**12.12.2018 Bulletin 2018/50**

(51) Int Cl.:
**B64D 27/24** *(2006.01)* **B64D 27/02** *(2006.01)*
**B60W 20/17** *(2016.01)*

(21) Numéro de dépôt: **18174535.7**

(22) Date de dépôt: **28.05.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.06.2017 FR 1755027**

(71) Demandeur: **Airbus (S.A.S.)**
**31700 Blagnac (FR)**

(72) Inventeurs:
• **FERRAN, Benoit**
**75011 Paris (FR)**
• **JOUBERT, Emmanuel**
**92130 Issy-Les-Moulineaux (FR)**
• **FOUQUET, Nicolas**
**78140 Velizy Villacoublay (FR)**
• **LANDOLT, Jonathan**
**31000 Toulouse (FR)**

(74) Mandataire: **Sarraméa, Claude**
**Airbus Operations (S.A.S)**
**XIF - M0101/1**
**316, route de Bayonne**
**31060 Toulouse Cedex (FR)**

(54) **METHODE DE GESTION ET ARCHITECTURE DE SYSTEME DE PROPULSION HYBRIDE**

(57) L'invention concerne une méthode (1000) pour la gestion d'une propulsion hybride thermique/électrique d'un aéronef au cours de ses différentes phases de vol. La propulsion hybride reçoit à chaque instant i une commande de puissance totale $P_{tot,com,i}$ répartie entre des commandes de puissance thermique $P_{th,com,i}$ et électrique $P_{e,com,i}$.

La méthode comprend :
- une étape de calcul (1100) d'une commande de puissance thermique maximale $P_{th,com,max,i}$ admissible pour le respect d'objectifs acoustiques au sol ;
- une étape de sélection (1200) de la commande de puissance thermique $P_{th,com,i}$ dans une plage de valeurs bornée ;
- une étape de détermination (1300) de la commande de puissance électrique $P_{e,com,i}$.

Les commandes de puissance thermique $P_{th,com,i}$ et électrique $P_{e,com,i}$ fournies par la propulsion hybride sont ainsi ajustées au cours des différentes phases de vol suivant une hauteur $h_i$ de l'avion afin de permettre le respect au sol d'exigences acoustiques.

L'invention concerne également une architecture pour la mise en oeuvre de la méthode.

Figure 2

**Description**

DOMAINE TECHNIQUE

L'invention appartient au domaine des véhicules à propulsion hybride.
Plus particulièrement, l'invention appartient au domaine des avions à propulsion hybride.

ETAT DE L'ART

Traditionnellement, la réduction du bruit des moteurs thermiques des avions durant les phases de vol en basse altitude (décollage, montée initiale, approche, atterrissage) dans le domaine de l'aviation est réalisée par traitement des sources sonores afin d'en limiter le rayonnement.
Par exemple, le brevet européen EP 2932051 décrit des panneaux acoustiques destinés à être fixés à l'intérieur d'un carter de soufflante de turboréacteur. La demande de brevet américain US 2015/0367953 décrit un revêtement acoustique pour turbofan.
Ce type de revêtement acoustique complexe représente une masse embarquée conséquente non nécessaire aux phases de vol en haute altitude (fin de montée, croisière, descente initiale), pour lesquelles le rayonnement acoustique n'est plus problématique.
Le développement des avions à propulsion mixte thermique/électrique ont conduit à une stratégie d'hybridation utilisant les modes de propulsion en fonction des phases de vol suivant le niveau de bruit rayonné : la propulsion électrique pour les phases de vol basse altitude et à la propulsion thermique pour les phases de vol en haute altitude. Le basculement du mode de propulsion électrique sur le mode de propulsion thermique est réalisé lorsque l'empreinte sonore au sol avec la propulsion thermique est acceptable.
Un inconvénient de cette stratégie d'hybridation est qu'elle nécessite un système de batteries ayant une masse embarquée importante afin de pouvoir fournir l'énergie électrique nécessaire aux phases de décollage et de vol en basse altitude, ce qui affecte la performance de l'avion.
Par ailleurs, le système de batteries alimentant une telle propulsion doit être dimensionné selon les exigences du décollage et donc être composé de batteries à densité de puissance importante, de sorte à délivrer des puissances élevées à des tensions moyennes, voire basses, impliquant un courant de décharge élevé, ce qui réduit leur performance de stockage. En conséquence, la densité énergétique des batteries embarquées est moindre, leur autonomie réduite, et la masse embarquée du système de batteries est défavorable.

EXPOSE DE L'INVENTION

L'invention apporte une solution aux problèmes non résolus de l'art antérieur et permet de bénéficier des performances de la propulsion thermique sur l'ensemble des phases de vol dans le respect des exigences acoustiques au sol.
L'invention concerne une méthode pour la gestion d'une propulsion hybride thermique/électrique d'un aéronef destinée à recevoir à chaque instant i une commande de puissance totale $P_{tot,com,i}$ de l'aéronef, ladite propulsion hybride comportant un chemin de propulsion thermique et un chemin de propulsion électrique destinés à recevoir respectivement une commande de puissance thermique $P_{th,com,i}$ et une commande de puissance électrique $P_{e,com,i}$ dont une somme est égale à la puissance totale $P_{tot,com,i}$ reçue par ladite propulsion hybride. Selon l'invention, la méthode comporte :

- une étape de calcul d'une commande de puissance thermique maximale $P_{th,com,max,i}$ admissible, définie comme la commande de puissance thermique $P_{th,com,i}$ la plus grande, dans une plage de valeurs [0 ; $P_{tot,com,i}$], permettant l'obtention d'une empreinte acoustique maximale au sol des bruits aérodynamiques de l'aéronef compatible avec une exigence de niveau sonore admissible au sol ;
- une étape de sélection de la commande de puissance thermique $P_{th,com,i}$ telle que comprise dans la plage de valeurs [0 ; $P_{th,com,max,i}$] , ladite commande de puissance thermique $P_{th,com,i}$ étant égale à un pourcentage de puissance thermique $P_{th\%,i}$ de la commande de puissance thermique maximale $P_{th,com,max,i}$ ;
- une étape de détermination de la commande de puissance électrique $P_{e,com,i}$ telle que :
$P_{e,com,i} = P_{tot,com,i} - P_{th,com,i}$

Dans un mode de mise en oeuvre, le pourcentage de puissance thermique $P_{th\%,i}$ est ajusté à chaque instant i en fonction de l'évolution du profil de la commande de puissance thermique maximale $P_{th,com,max,i}$ calculée à l'étape de calcul.
Dans un mode de mise en oeuvre, le pourcentage de puissance thermique $P_{th\%,i}$ est ajusté à chaque instant i en fonction d'un état de vieillissement d'un système de batteries du chemin de propulsion électrique.

Dans un mode de mise en oeuvre, le pourcentage de puissance thermique Pth%,i est ajusté à chaque instant i en fonction d'un niveau de carburant du chemin de propulsion thermique (130).

Dans un mode de mise en oeuvre le pourcentage de puissance thermique Pth%,i est sensiblement égal à 100% à chaque instant i.

L'invention concerne également une architecture d'un aéronef à propulsion hybride pour la mise en oeuvre de la méthode selon l'invention. L'architecture selon l'invention comporte :

- une commande pilote de puissance globale d'une propulsion hybride thermique/électrique ;
- un chemin de propulsion thermique de la propulsion hybride, comprenant un moteur thermique à combustion interne ;
- un chemin de propulsion électrique de la propulsion hybride, comprenant un moteur électrique ;
- un organe de propulsion ;

Selon l'invention, l'architecture comporte un dispositif de gestion de la propulsion hybride configuré pour :

- calculer une commande de puissance thermique maximale Pth,com,max,i admissible en fonction de contraintes acoustiques prédéfinies au sol ;
- sélectionner la commande de puissance thermique Pth,com,i à transmettre au chemin de propulsion thermique;
- déterminer la commande de puissance électrique Pe,com,i à transmettre au chemin de propulsion électrique.

Dans une forme de réalisation, l'architecture comporte en outre un système de gestion de puissance susceptible d'interpréter une information de la commande pilote de puissance pour contrôler séparément le chemin de propulsion thermique et le chemin de propulsion électrique, de manière à permettre un ajustement des commandes de puissances thermique Pth,com,i et électrique Pe,com,i délivrées par lesdits chemins de propulsion thermique et électrique de la propulsion hybride, ledit système de gestion de puissance comprenant par ailleurs des moyens de calcul intégrant notamment :

- une carte du sol permettant de réaliser les calculs sur un maillage de ce sol ;
- un modèle acoustique de l'avion intégrant un ensemble de caractéristiques acoustiques tels que diagrammes de directivité des sources acoustiques aérodynamiques ou moteurs ;
- des objectifs acoustiques.

BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

La Figure 1 représente un schéma de principe de la distribution des puissances totale, thermique et électrique selon la méthode de l'invention.
La Figure 2 représente les étapes principales de la méthode selon l'invention.
La Figure 3 représente les profils d'évolution de la commande de puissance thermique au cours de la montée de l'avion dans trois modes de mise en oeuvre de la méthode selon l'invention.
La Figure 4 illustre un exemple d'évolutions des commandes de puissance thermique et électrique lors des phases de décollage, montée initiale, fin de montée et croisière.
La Figure 5 représente un schéma d'une architecture hybride série d'un avion selon un mode de réalisation de l'invention.
La Figure 6 représente un schéma d'une architecture hybride parallèle d'un avion selon un mode de réalisation de l'invention.

DESCRIPTION DETAILLEE

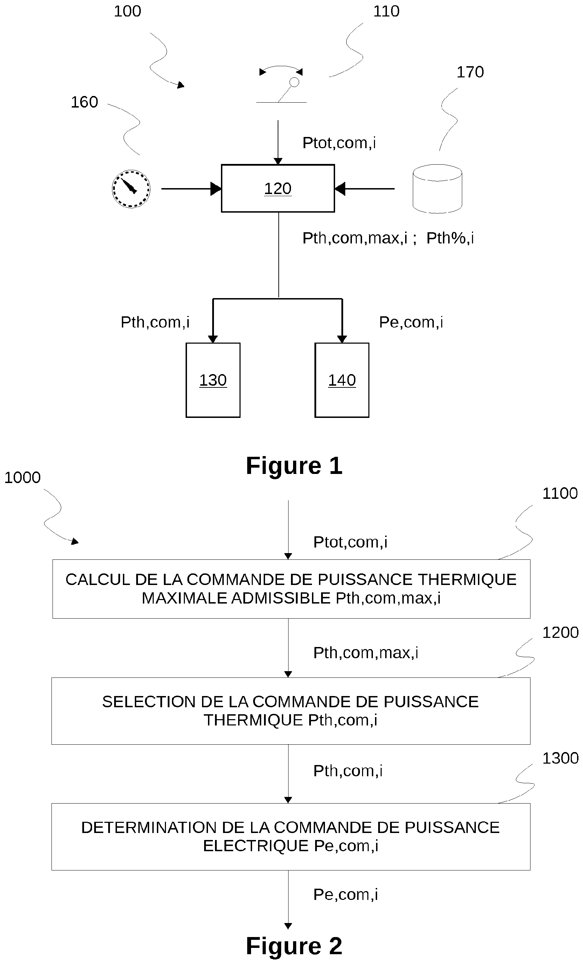

En référence aux figures 1 et 2, une méthode 1000 selon l'invention permet de gérer une chaîne de propulsion hybride d'un avion durant l'ensemble de ses phases de vol : décollage, montée initiale, fin de montée, croisière, descente initiale, approche, atterrissage. Il s'agit d'une méthode itérative qui est mise en oeuvre continûment durant toutes les phases du vol.

Il est entendu par « continûment » que le temps de mise en oeuvre d'une itération de la méthode et un intervalle temporel entre deux itérations de la méthode sont suffisamment petits pour que la mise en oeuvre de la méthode puisse être perçue par tout système et ou opérateur susceptible d'interagir avec la chaîne de propulsion hybride comme étant continue.

La propulsion hybride de l'avion comporte :

- un chemin de propulsion thermique 130 ;
- un chemin de propulsion électrique 140.

Dans la suite de la description, il est pris comme hypothèse que la propulsion électrique est moins bruyante que la propulsion thermique pour des puissances similaires, ce qui est observé de manière générale.

A une hauteur h donnée, une puissance totale Ptot,h délivrée par la propulsion hybride est égale la somme d'une puissance thermique Pth,h délivrée par le chemin de propulsion thermique 130 et d'une puissance électrique Pe,h délivrée par le chemin de propulsion électrique 140 :

$$P_{tot,h} = P_{th,h} + P_{e,h} \qquad\qquad (1)$$

En référence à la figure 1, à un instant i, la propulsion hybride reçoit une commande de puissance totale Ptot,com,i à délivrer, laquelle commande de puissance totale Ptot,com,i est tributaire de la hauteur hi de l'avion à l'instant i et de la phase de vol de l'avion considérée. La commande de puissance totale Ptot,com,i est ensuite répartie entre une commande de puissance thermique Pth,com,i et une commande de puissance électrique Pe,com,i destinées à être reçues respectivement par le chemin de propulsion thermique 130 et le chemin de propulsion électrique 140, de sorte qu'un niveau de bruit Lavion,i au sol imputable à l'avion à l'instant i respecte un objectif de niveau sonore Lref,i, par exemple pour respecter les exigences établies par les Direction de l'Aviation Civile ou l'Organisation de l'Aviation Civile Internationale.

Selon l'invention, la commande de puissance totale Ptot,com,i est répartie entre les chemins de propulsion thermique 130 et électrique 140 de sorte qu'il existe une transition progressive entre un mode de propulsion à basse altitude privilégiant la propulsion électrique, moins bruyante, et un mode de propulsion à haute altitude privilégiant la propulsion thermique, plus bruyante. Au cours de cette transition, les commandes de puissance thermique Pth,com,i et électrique Pe,com,i sont en général sensiblement non nulles et sont amenées à évoluer. De cette manière, la propulsion bénéficie de manière optimale de la puissance apportée par la propulsion thermique, et la puissance fournie par une génération d'énergie électrique 141, par exemple des accumulateurs, est moindre que pour une propulsion entièrement électrique, et donc l'énergie requise également, ce qui permet *in fine* un redimensionnement de ladite génération d'énergie électrique et une minimisation de la masse du système de batteries embarqué.

En référence à la figure 2, dans une première étape de la méthode 1000 selon l'invention, la commande de puissance thermique maximale Pth,com,max,i admissible à l'instant i pour le respect des objectifs acoustiques au sol, est calculée 1100. Elle est déterminée comme la puissance thermique Pth,com,i la plus grande vérifiant, pour la hauteur hi de l'avion et pour tout point M du sol dans un environnement acoustique de l'avion, les conditions ci-dessous :

$$\begin{cases} L_{ref,i}(M) - L_{avion,i}\big(P_{tot,com,i} - P_{th,com,i}; P_{th,com,i}; \varphi; M\big) \geq 0 \\ P_{th,com,i} \leq P_{tot,com,i} \end{cases} \qquad (2)$$

Où :

- Lavion,i(a,b,φ,M) est le niveau sonore imputable à l'avion, à l'instant i, en fonction de :

    - sa puissance électrique a ;
    - sa puissance thermique b ;
    - des paramètres de position de l'avion φ et des paramètres d'un environnement de l'avion (assiette, hauteur, température ambiante,...) ;
    - du point M considéré.

On entend par « un environnement acoustique de l'avion » un ensemble de paramètres influant sur la propagation des ondes sonores émises par les différentes sources sonores de l'avion (hélice, moteurs et autres sources aérodynamiques), par exemple température ambiante de l'air, relief du sol, etc.

Le niveau de bruit Lavion,i est calculé à l'aide d'un modèle acoustique de l'avion et de son environnement et intègre notamment des paramètres de vol 160 (paramètres de position de l'avion par exemple) et des données acoustiques 170 (diagrammes de directivité des sources sonores par exemple). Suivant la complexité du modèle acoustique retenu, le nombre de paramètres pris en compte dans la modélisation peut varier et peut intégrer par exemple :

- assiette de l'avion ;
- température ambiante ;
- pression ambiante ;
- diagramme de directivité des moteurs ;

Par la suite, les commandes de puissance thermique Pth,com,i et électrique Pe,com,i à délivrer sont respectivement sélectionnée 1200 et déterminée 1300 en tenant compte de la valeur maximale Pth,com,max,i de la commande de puissance thermique Pth,com,i déterminée à l'étape précédente 1100 et de la condition de l'équation (1), de sorte que les commandes de puissance thermique Pth,com,i et électrique Pe,com,i appartiennent respectivement à des plages de valeurs [0 ; Pth,com,max,i] et [Pe,com,min,i ; Ptot,com,i] où Pe,com,min,i désigne une commande de puissance électrique minimale, complémentaire de la commande de puissance thermique maximale Pth,com,max,i pour le respect des exigences acoustiques, c'est-à-dire que :

$$P_{tot,com,i} = P_{th,com,max,i} + P_{e,com,min,i} \qquad (3)$$

Ainsi, il est retenu lors de l'étape de sélection de la commande de puissance thermique 1200, un pourcentage de puissance thermique Pth%,i de la commande de puissance thermique maximale Pth,com,max,i calculée lors de l'étape précédente 1100 :

$$P_{th,com,i} = P_{th\%,i} P_{th,com,max,i} \qquad (4)$$

Lors de l'étape de détermination de la commande de puissance électrique 1300, la commande de puissance électrique Pe,com,i est déterminée par la relation :

$$P_{tot,com,i} = P_{th,com,i} + P_{e,com,i} \qquad (5)$$

Dans un mode de mise en oeuvre, le pourcentage de puissance thermique Pth%,i est égal à chaque instant i à 100% de la commande de puissance thermique maximale Pth,com,max,i calculée 1100. Cette stratégie permet de bénéficier de manière optimale des performances du moteur thermique tout en respectant les exigences acoustiques au sol.

Cependant, bien que la commande de puissance thermique maximale admissible Pth,com,max,i soit globalement croissante (respectivement décroissante) au cours de la montée (respectivement de la descente) du fait de la prise (respectivement la perte) globale de hauteur de l'avion, il se peut que l'évolution de ladite commande subisse des variations locales de monotonie, appelées par la suite « variations parasites ». Ce phénomène peut par exemple survenir lorsque l'avion est amené à décoller ou atterrir à proximité de montagnes ou de collines, l'évolution du profil du sol dans l'environnement de l'avion dans ces conditions pouvant créer localement des différentiels de hauteur contraires à son évolution globale ou à des exigences variables en raison d'un environnement sol particulier. Dans ce genre de situation, un pourcentage de puissance thermique Pth%,i de 100% oblige à ajuster en conséquence à chaque instant i la commande de puissance thermique Pth,com,i afin de toujours respecter les exigences acoustiques.

Pour éviter de tels ajustements, dans un mode alternatif de mise en oeuvre, le pourcentage de puissance thermique Pth%,i évolue de la manière suivante :

- il est fixé par défaut à un pourcentage de puissance thermique par défaut Pth%,d strictement inférieur à 100%, par exemple 70% ;
- il reste fixé à cette valeur tant que ne sont pas observées des variations parasites de la commande de puissance thermique maximale admissible Pth,com,max,i ;
- dès que de telles variations parasites sont observées, le pourcentage de puissance thermique Pth%,i est ajusté de sorte que la commande de puissance thermique Pth,com,i reste égale durant ces variations parasites à la valeur de la commande de puissance thermique Pth,com,i déterminée avant le début desdites variations parasites. Une fois que ces variations parasites ont disparu, le pourcentage de puissance thermique Pth%,i est redéfini comme étant égal à la valeur par défaut Pth%,d.

Il pourra être considéré par exemple que les variations parasites ont disparu après une absence de variation de la monotonie de la courbe de la commande de puissance thermique maximale admissible Pth,com,max,i sur une durée prédéfinie.

Dans un mode de mise en oeuvre, le choix du pourcentage de puissance thermique initial Pth%,d dépend des risques d'occurrence des variations parasites et de leur amplitude, donc de l'environnement de l'avion lors des phases de vol à basse altitude. Il est avantageusement suffisamment petit pour pouvoir absorber les variations parasites prévisibles, c'est-à-dire permettre a priori de conserver une valeur constante pendant toute la durée des variations parasites.

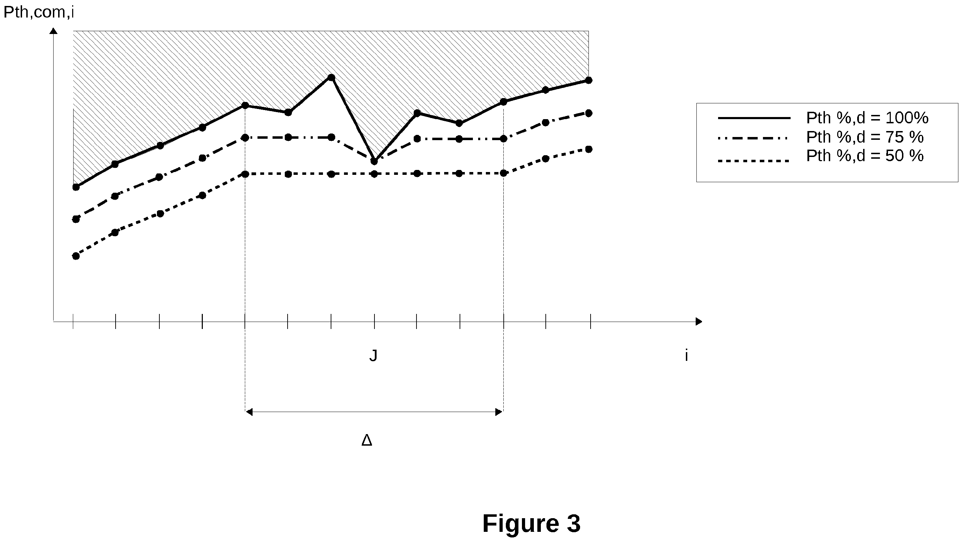

A titre d'exemple, il est fait référence à la figure 3 illustrant un profil d'évolution de la commande de puissance thermique Pth,com,i en fonction du temps au cours d'une phase de montée.

La courbe en trait continu illustre la commande de puissance thermique maximale Pth,com,max,i admissible calculée à l'étape 1100, en fonction du temps échantillonné, symbolisée par un point. Cette courbe continue est équivalente à la commande de puissance thermique Pth,com,i sélectionnée à l'étape 1200 pour une stratégie d'hybridation selon laquelle le pourcentage de puissance thermique Pth%,i est égal à tout instant à 100%. La zone hachurée correspond donc aux valeurs interdites de commande de puissance thermique Pth,com,i.

Sur une zone Δ sont observées des variations parasites de la commande maximale de puissance thermique Pth,com,max,i. Trois modes de mise en oeuvre de la méthode sont illustrés :

Dans un premier mode, le pourcentage de puissance thermique Pth%,d par défaut est fixé à 100%, et le pourcentage de puissance thermique Pth%,i n'est jamais réajusté et reste égal au pourcentage par défaut. La commande de puissance thermique Pth,com,i (en trait continu) subit alors les mêmes variations que la commande maximale de puissance thermique Pth,com,max,i.

Dans un second mode, le pourcentage de puissance thermique Pth%,d par défaut est fixé à 50% mais le pourcentage de puissance thermique Pth%,i peut être réajusté selon l'évolution de la commande de puissance thermique maximale Pth,com,max,i. Dans ce mode de mise en oeuvre, dès lors que les variations parasites sont identifiées, la valeur de la commande de puissance thermique Pth,com,i est fixée à une valeur constante égale par exemple à la valeur qu'elle avait à l'itération précédente. Dans ce mode de mise en oeuvre, le pourcentage de puissance thermique Pth%,i est donc réajusté durant les variations parasites de sorte que la commande de puissance thermique Pth,com,i (en trait interrompu) reste constante et ne subit pas les variations de la commande maximale de puissance thermique Pth,com,max,i.

Dans un troisième mode de mise en oeuvre, le pourcentage de puissance thermique Pth%,d par défaut est fixé à 75% mais le pourcentage de puissance thermique Pth%,i peut être réajusté selon l'évolution de la commande de puissance thermique maximale Pth,com,max,i. Ce mode de mise en oeuvre est proche du second mode de mise en oeuvre, à ceci près que l'amplitude des variations parasites est telle que la commande de puissance thermique Pth,com,i ne peut rester constante durant les variations parasites, sans quoi les objectifs acoustiques au sol ne seraient plus respectés à l'instant J. A l'instant J, le pourcentage de puissance thermique Pth%,J est donc ramené à 100%, pour respecter les objectifs acoustiques tout en minimisant la variation de la commande de puissance thermique. Dans ce mode de mise en oeuvre, la commande de puissance thermique Pth,com,i (en trait mixte) ne subit que très légèrement les variations de la commande maximale de puissance thermique Pth,com,max,i.

Dans un mode alternatif de mise en oeuvre, le pourcentage de puissance thermique Pth%,i peut également être ajusté pour tenir compte de l'autonomie de chacun des chemins de propulsion thermique 130 et électrique 140.

A titre d'exemple, dans le cas de batterie à faible autonomie ou présentant un état de vieillissement avancé, le pourcentage de puissance thermique Pth%,i peut être important afin de privilégier la propulsion thermique, par exemple égal à 90%.

De même, dans des cas d'urgence ou des situations dans lesquelles un carburant du chemin de propulsion thermique doit être consommé avec parcimonie, par exemple en cas d'attente ou de déroutement de l'avion, le pourcentage de puissance thermique Pth%,i peut être faible afin de privilégier la propulsion électrique, par exemple égal à 20%.

Avantageusement, les batteries sont rechargées au cours des phases de vol durant lesquelles le chemin de propulsion électrique est sensiblement inactif.

A titre d'exemple, la méthode de l'invention est détaillée pour chacune des phases de vol de l'avion dans un mode particulier de mise en oeuvre.

Durant la phase de décollage, la commande de puissance thermique Pth,com,i est égale à une valeur initiale Pth,com,0 et la commande de puissance électrique Pth,com,i est égale à une valeur initiale Pe,com,0.

Au cours de la montée initiale, c'est-à-dire entre une hauteur nulle et une première hauteur limite h1, la commande de puissance thermique Pth,com,i augmente globalement avec la hauteur hi, ladite commande de puissance thermique pouvant diminuer localement en cas de variations parasites, comme vu plus haut. Le pourcentage de puissance thermique Pth%,i est par exemple égal à 100%. La commande de puissance électrique Pe,com,i diminue avec la hauteur hi, de sorte que l'équation (5) est respectée.

Lorsque l'avion atteint la première hauteur limite h1, la commande de puissance électrique Pe,com,i devient sensiblement nulle, la propulsion devient entièrement thermique et le reste durant la fin de la montée et la croisière. A partir de cette hauteur limite h1, la commande de puissance thermique Pth,com,i est sensiblement égale à la puissance totale commandée Ptot,com,i.

A titre d'exemple, pour un avion à propulsion hybride dont la masse maximale au décollage est de 3 000 kg, la hauteur limite h1 est d'environ 2 000 pieds (environ 600 mètres).

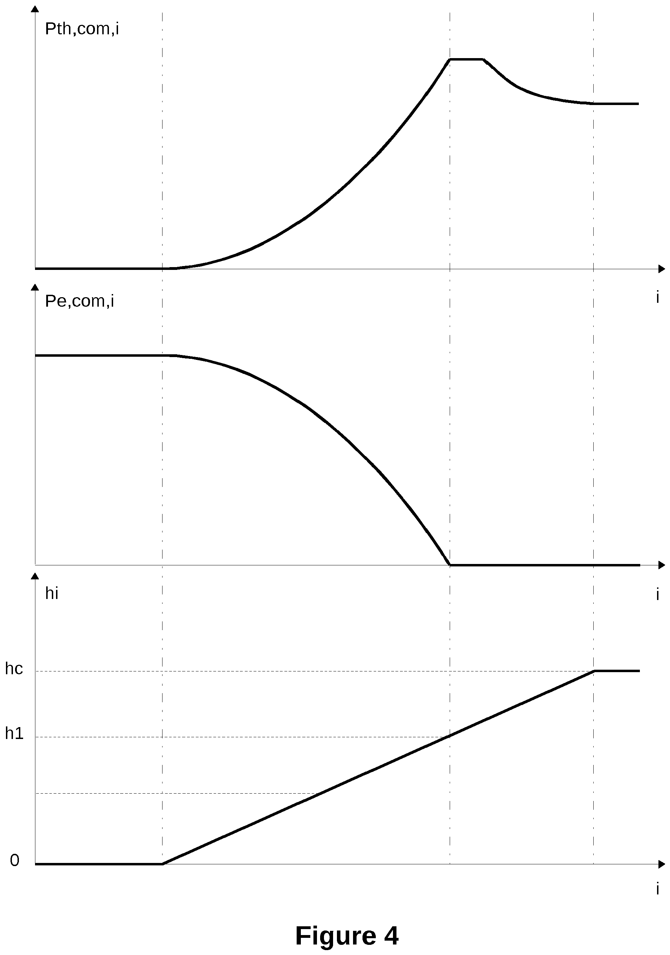

Des exemples de profils d'évolution des commandes de puissance thermique Pth,com,i et électrique Pe,com,i au cours des phases de décollage, montée initiale et fin de montée sont donnés sur la figure 4.

Préférentiellement, les batteries sont rechargées durant la phase de croisière.

La propulsion est entièrement thermique durant la phase de descente initiale, qui se déroule entre une hauteur de croisière hc et une seconde hauteur limite h2 à partir de laquelle les exigences acoustiques au sol ne sont plus respectées.

Au cours de la phase d'approche se déroulant entre la seconde hauteur limite h2 et l'atterrissage, les commandes de puissance thermique Pth,com,i et électrique Pe,com,i sont ajustées selon la méthode 1000 de l'invention de manière similaire à l'approche décrite pour la montée initiale. Durant la phase d'approche, la commande de puissance thermique Pth,com,i diminue globalement tandis que la commande de puissance électrique Pe,com,i augmente globalement.

Selon les solutions de l'art antérieur décrites plus haut, la commande de puissance totale Ptot,com,i suit une logique binaire :

- au cours des phases de vol à basse altitude, la commande de puissance électrique Pe,com,i est sensiblement égale à la commande de puissance totale Ptot,com,i et la commande de puissance thermique Pth,com,i est sensiblement nulle, afin de limiter le rayonnement acoustique de la propulsion ;
- au cours des phases de vol à haute altitude, la commande de puissance thermique Pth,com,i est sensiblement égale à la commande de puissance totale Ptot,com,i et la commande de puissance électrique Pe,com,i est sensiblement nulle, afin de bénéficier des performances de la propulsion thermique et permettre une recharge des batteries.

Comparée aux solutions hybrides existant actuellement pour lesquelles les chemins de propulsion thermique et électrique ne sont sensiblement pas actifs simultanément durant les phases de vol de l'avion, la méthode selon l'invention permet de diminuer la puissance fournie par les batteries durant le vol, et ainsi l'énergie électrique requise.

Par ailleurs, lors de la phase de montée initiale, la commande de puissance électrique requise diminue avec l'altitude. En conséquence, grâce à cette baisse de puissance électrique requise, il n'est pas nécessaire, pour compenser la baisse de tension aux bornes des batteries au cours de la montée, d'augmenter le courant délivré par les batteries de manière aussi importante que pour une hybridation fonctionnant entièrement grâce à une propulsion électrique sur cette même phase de montée. Ceci permet d'utiliser des batteries ayant une autonomie plus importante, ce qui facilite également leur conditionnement thermique grâce à la réduction de l'effet Joule.

L'ensemble de ces éléments permet de réduire avantageusement la masse des batteries embarquées dans l'avion.

En référence aux figures 1, 5 et 6, l'invention concerne également une architecture 100 d'un système de propulsion hybride pour la mise en oeuvre de la méthode décrite ci-dessus.

Dans la forme de réalisation décrite ci-dessous, l'architecture 100 selon l'invention comporte :

- une commande pilote 110 de puissance ;
- un système de gestion 120 de puissance ;
- un chemin de propulsion thermique 130 de la propulsion hybride, comprenant notamment un réservoir de carburant 131 alimentant un moteur thermique MT à combustion interne ;
- un chemin de propulsion électrique 140 de la propulsion hybride, comprenant notamment au moins une batterie 141 alimentant une unité de contrôle moteur 142 contrôlant un moteur électrique ME ;
- un organe de propulsion 150 par exemple une hélice ;

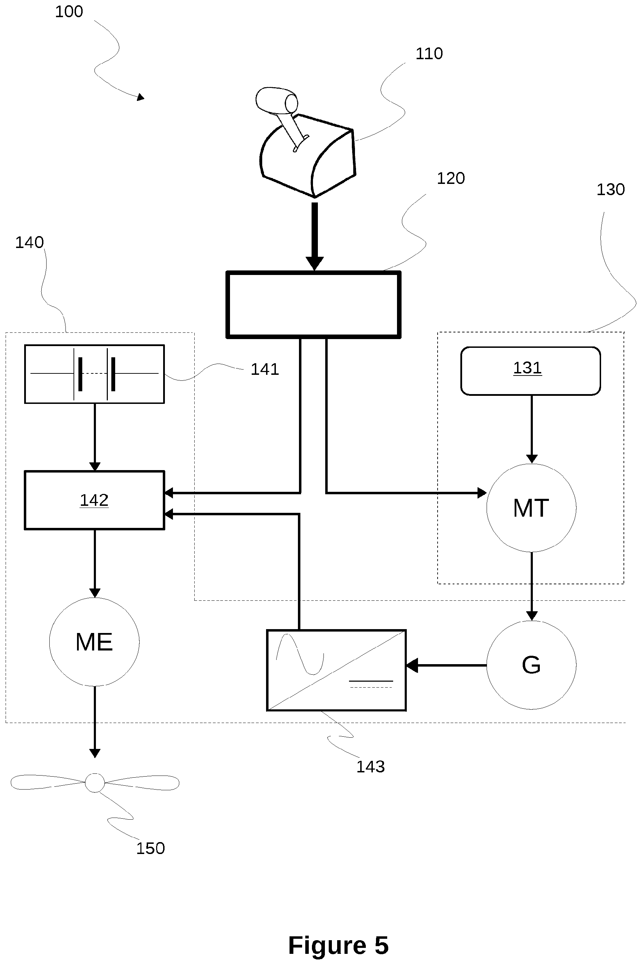

La figure 5 représente une architecture hybride série en ce qu'une hélice 150 est entraînée par le moteur électrique ME. Dans cette architecture, le chemin de propulsion électrique 140 comporte également un générateur G alimenté par le moteur thermique MT, ainsi qu'un redresseur 143.

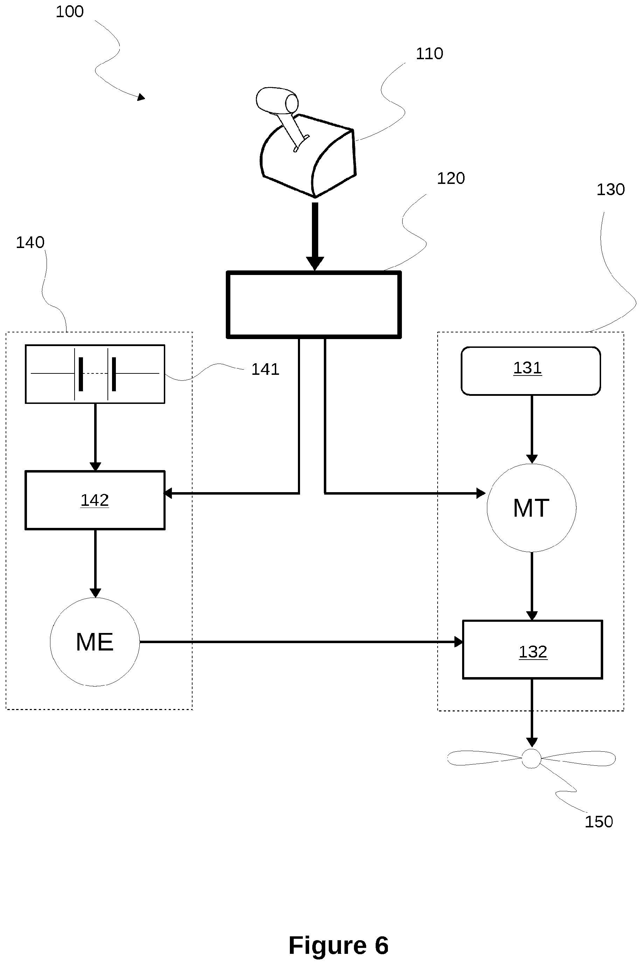

La figure 6 représente une telle architecture hybride en parallèle en ce que l'hélice 150 est entraînée, en fonction des conditions de vol, par le moteur électrique ME et ou le moteur thermique MT. Dans ce type d'architecture, le chemin de propulsion thermique 130 comporte également un couplage mécanique 132 des arbres de puissance du moteur électrique ME et du moteur thermique MT.

La commande pilote 110 transmet au système de gestion 120 de puissance la commande de puissance totale Ptot,com,i requise et ajustée manuellement par un pilote ou par un pilote automatique au cours du vol et en fonction des phases de vol.

Le système de gestion 120 permet de distribuer la commande de puissance totale Ptot,com,i entre les chemins de propulsion thermique 130 et électrique 140, selon la méthode décrite plus haut. Le système de gestion 120 communique avec le moteur thermique MT du chemin de propulsion thermique 130 et l'unité de contrôle moteur 142 du chemin de propulsion électrique, auxquels les consignes de puissance sont transmises.

Le système de gestion 120 comporte des calculateurs pour le calcul des niveaux de bruit Lavion,i au sol imputables à l'avion. Pour la réalisation de ce calcul, le système de gestion 120 intègre une base de données comportant notamment :

- une carte du sol permettant de réaliser les calculs sur un maillage de ce sol, par exemple à 1 mètre au-dessus du sol ;
- un modèle acoustique de l'avion intégrant un ensemble de caractéristiques acoustiques telles que diagrammes de directivité des sources acoustiques aérodynamiques ou moteurs, par exemple diagrammes de directivité de l'hélice 150 ;
- des exigences acoustiques à prendre en considération par défaut ou pour une zone particulière.

Le système de gestion 120 de puissance détermine le couple de puissances (Pe,com,min,i ; Pth,com,max,i) selon la méthode de l'invention. Il comporte également des moyens de répartition de puissance pour répartir sur les chemins de propulsion thermique 130 et électrique 140 les commandes de puissances déterminées.

Dans la forme de réalisation décrite sur la figure 1, le système de gestion peut prendre en entrée des paramètres de vol 160 (assiette, hauteur,...) et/ou des données acoustiques 170 (température ambiante de l'air, diagramme de directivité des sources sonores,...).

## Revendications

**1.** Méthode (1000) pour la gestion d'une propulsion hybride thermique/électrique d'un aéronef destinée à recevoir à chaque instant i une commande de puissance totale Ptot,com,i de l'aéronef, ladite propulsion hybride comportant un chemin de propulsion thermique (130) et un chemin de propulsion électrique (140) destinés à recevoir respectivement une commande de puissance thermique Pth,com,i et une commande de puissance électrique Pe,com,i dont une somme est égale à la puissance totale Ptot,com,i reçue par ladite propulsion hybride, ladite méthode étant **caractérisée en ce qu'**elle comporte :

- une étape de calcul (1100) d'une commande de puissance thermique maximale Pth,com,max,i admissible, définie comme la commande de puissance thermique Pth,com,i la plus grande, dans une plage de valeurs [0 ; Ptot,com,i], permettant l'obtention d'une empreinte acoustique maximale au sol des bruits aérodynamiques de l'aéronef compatible avec une exigence de niveau sonore admissible au sol ;
- une étape de sélection (1200) de la commande de puissance thermique Pth,com,i telle que comprise dans la plage de valeurs [0 ; Pth,com,max,i] , ladite commande de puissance thermique Pth,com,i étant égale à un pourcentage de puissance thermique Pth%,i de la commande de puissance thermique maximale Pth,com,max,i ;
- une étape de détermination (1300) de la commande de puissance électrique Pe,com,i telle que :

$$\text{Pe,com,i} = \text{Ptot,com,i} - \text{Pth,com,i}$$

**2.** Méthode selon la revendication 1 **caractérisée en ce que** le pourcentage de puissance thermique Pth%,i est ajusté à chaque instant i en fonction de l'évolution du profil de la commande de puissance thermique maximale Pth,com,max,i calculée à l'étape de calcul (1100).

**3.** Méthode selon la revendication 1 ou la revendication 2 **caractérisée en ce que** le pourcentage de puissance thermique Pth%,i est ajusté à chaque instant i en fonction d'un état de vieillissement d'un système de batteries du chemin de propulsion électrique (140).

**4.** Méthode selon l'une quelconque des revendications précédentes **caractérisée en ce que** le pourcentage de puissance thermique Pth%,i est ajusté à chaque instant i en fonction d'un niveau de carburant du chemin de propulsion thermique (130).

**5.** Méthode (1000) selon la revendication 1 **caractérisée en ce que** le pourcentage de puissance thermique Pth%,i est sensiblement égal à 100% à chaque instant i.

**6.** Architecture (100) d'un aéronef à propulsion hybride pour la mise en oeuvre d'une méthode (1000) selon l'une quelconque des revendications précédentes, comportant :

- une commande pilote (110) de puissance globale d'une propulsion hybride thermique/électrique ;
- un chemin de propulsion thermique (130) de la propulsion hybride, comprenant un moteur thermique (MT) à combustion interne ;
- un chemin de propulsion électrique (140) de la propulsion hybride, comprenant un moteur électrique (ME) ;
- un organe de propulsion (150) ;

ladite architecture étant **caractérisée en ce qu'**elle comporte un dispositif de gestion de la propulsion hybride configuré pour :

- calculer une commande de puissance thermique maximale $P_{th,com,max,i}$ admissible en fonction de contraintes acoustiques prédéfinies au sol ;
- sélectionner la commande de puissance thermique $P_{th,com,i}$ à transmettre au chemin de propulsion thermique (130) ;
- déterminer la commande de puissance électrique $P_{e,com,i}$ à transmettre au chemin de propulsion électrique (140).

**7.** Architecture (100) selon la revendication 6 **caractérisée en ce qu'**elle comporte en outre un système de gestion de puissance (120) susceptible d'interpréter une information de la commande pilote (110) de puissance pour contrôler séparément le chemin de propulsion thermique (130) et le chemin de propulsion électrique (140), de manière à permettre un ajustement des commandes de puissances thermique $P_{th,com,i}$ et électrique $P_{e,com,i}$ délivrées par lesdits chemins de propulsion thermique et électrique de la propulsion hybride, ledit système de gestion de puissance comprenant par ailleurs des moyens de calcul intégrant notamment :

- une carte du sol permettant de réaliser les calculs sur un maillage de ce sol ;
- un modèle acoustique de l'avion intégrant un ensemble de caractéristiques acoustiques tels que diagrammes de directivité des sources acoustiques aérodynamiques ou moteurs ;
- des objectifs acoustiques.

100        110

170

160

Ptot,com,i

120

Pth,com,max,i ; Pth%,i

Pth,com,i                    Pe,com,i

130                    140

## Figure 1

1000

1100

Ptot,com,i

CALCUL DE LA COMMANDE DE PUISSANCE THERMIQUE
MAXIMALE ADMISSIBLE Pth,com,max,i

1200

Pth,com,max,i

SELECTION DE LA COMMANDE DE PUISSANCE
THERMIQUE Pth,com,i

1300

Pth,com,i

DETERMINATION DE LA COMMANDE DE PUISSANCE
ELECTRIQUE Pe,com,i

Pe,com,i

## Figure 2

**Figure 3**

EP 3 412 576 A1

**Figure 4**

**Figure 5**

**Figure 6**

**Europäisches Patentamt**
**European Patent Office**
**Office européen des brevets**

# RAPPORT DE RECHERCHE EUROPEENNE

Numéro de la demande

EP 18 17 4535

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2010/042215 A1 (SEARETE LLC [US]; FOSTER GLENN B [US]; HYDE RODERICK A [US]; ISHIKAWA) 15 avril 2010 (2010-04-15)<br>* figures 32-36 *<br>* la dernière phrase;<br>page 129 *<br>* page 130, lignes 11-14 * | 1-7 | INV.<br>B64D27/24<br>B64D27/02<br>B60W20/17 |
| A | US 2012/209456 A1 (HARMON FREDERICK G [US] ET AL) 16 août 2012 (2012-08-16)<br>* figures 3,5,8 *<br>* alinéas [0013], [0067] - [0070] * | 1-7 | |

DOMAINES TECHNIQUES RECHERCHES (IPC)

B60W
B64D
B60K

Le présent rapport a été établi pour toutes les revendications

| Lieu de la recherche | Date d'achèvement de la recherche | Examinateur |
|---|---|---|
| Munich | 10 juillet 2018 | Cetiner-Fresneda, B |

**ANNEXE AU RAPPORT DE RECHERCHE EUROPEENNE
RELATIF A LA DEMANDE DE BREVET EUROPEEN NO.**

EP 18 17 4535

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-07-2018

| Document brevet cité au rapport de recherche | Date de publication | Membre(s) de la famille de brevet(s) | Date de publication |
|---|---|---|---|
| WO 2010042215    A1 | 15-04-2010 | CN    102239321  A | 09-11-2011 |
| | | CN    102245878  A | 16-11-2011 |
| | | EP      2344739  A1 | 20-07-2011 |
| | | EP      2344740  A1 | 20-07-2011 |
| | | JP      5453620  B2 | 26-03-2014 |
| | | JP      5494666  B2 | 21-05-2014 |
| | | JP   2012505113  A | 01-03-2012 |
| | | JP   2012505348  A | 01-03-2012 |
| | | KR  20110083656  A | 20-07-2011 |
| | | KR  20110083657  A | 20-07-2011 |
| | | US   2010083631  A1 | 08-04-2010 |
| | | US   2010083668  A1 | 08-04-2010 |
| | | US   2010083669  A1 | 08-04-2010 |
| | | WO   2010042215  A1 | 15-04-2010 |
| | | WO   2010042218  A1 | 15-04-2010 |
| US 2012209456    A1 | 16-08-2012 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2932051 A

- US 20150367953 A